# EUROPEAN PATENT SPECIFICATION

(11) **EP 0 784 932 B1**
(45) Date of publication and mention of the grant of the patent: **26.06.2002**
(21) Application number: 96202982.3
(22) Date of filing: 29.10.1996
(51) Int. Cl.: A22C 21/00

(54) **Wing Remover**
Flügel-Entferner
Séparateur des ailes de volaille

(30) Priority: 12.08.1996 US 24004
(43) Date of publication of application: 23.07.1997
(73) Proprietor: SYSTEMATE HOLLAND B.V., NL-3281 AC Numansdorp (NL)
(72) Inventor: Verrijp, Bastiaan, 3281 AG Numansdorp (NL); Barendregt, Gerrit, 3274 CP Heinenoold (NL); Steenbergen, Willem C., 3281 BK Numansdorp (NL)
(74) Representative: Ferguson, Alexander

(56) References cited:
- EP-A- 0 312 881
- US-A- 4 562 613
- US-A- 4 827 570
- US-A- 4 993 115
- US-A- 5 429 549

## Description

### FIELD OF THE INVENTION

The present invention relates in general to a method and apparatus for removing the wings from birds as described in the preambles of claims 1 and 6, respectively. Such a method and apperakus are known from US-A-5.429.549.

### BACKGROUND OF THE INVENTION

In recent years, the processing of birds such as chickens, turkeys and other poultry has become highly automated, with the birds being suspended by their legs from overhead conveying systems and being conveyed along processing lines through a series of processing stations for evisceration, cut-up, and further processing. Such automated processing lines are much more efficient than the manual processing of birds such that it is highly desirable to perform as many as the processing steps on the birds as possible while the birds are suspended from their overhead conveying lines in order to minimize the handling and ensure greater uniformity and efficiency in the cutting up and processing of the birds. For example, birds now can be defeathered, decapitated, opened, eviscerated and cut apart while being advanced progressively through a poultry processing plant suspended from an overhead conveyor line. As a result, the labor required for processing of birds has been significantly reduced while uniformity and efficiency in the sectioning of the birds into various parts for packaging and sale has significantly increased.

A problem with early processing lines was the hazard of creating chips or other loose fragments of bone due to engagement of the bones with the cutting blades of such processing equipment. As a result, bone chips and fragments could become caught in the meat of the sectioned pieces of the birds that were packaged and shipped to the consumer, posing a significant health risk to the consumer. This has especially been a problem with the cutting of more delicate bones or portions of birds such as wings of birds. Accordingly, the removal of the wings of birds formerly was largely done by hand or by stand-alone wing removal machines. For example, U.S. Patent Nos. 4,016,644, 4,503,587 and 4,536,919 disclose automated processing apparatus that apparently reduce the risk of bone fragments being dislodged by cutting blades during the removal of wings from the birds.

Such prior art wing removal apparatus generally exert a dragging force on the wings that cause the shoulder joints between the wings and breasts of the birds to partially open for passage of cutting blades therethrough with minimal contact between the cutting blades and the bones of the joint. The operation of these types of processing machines has reduced the risk of bone fragments being left in the meat of cut-up birds. However, most of the prior art devices have a tendency to pull meat away from the breast portions of the birds, and remove such meat with the less valuable wings.

U.S. Patent No. 4,993,115 further discloses a compact wing cut-off machine for removing the wings from the carcasses of poultry or birds with a minimal amount of breast meat being removed therewith. However, such apparatus is not designed to work with an overhead conveying line. Rather, this device is a stand-alone machine that requires an operator to specifically position cut-apart sections of birds, including the breasts, upper backs and wings of the birds on a series of cradles for removal of the wings. In addition, such a wing removal apparatus is not designed to accommodate birds of varying sizes for removal of the wings therefrom.

Automated poultry wing removal apparatus have been developed for severing or cutting wings from birds while the birds are suspended from an overhead conveyor system, an example of which is disclosed in aforementioned U.S. Patent No. 5,429,549. This patent discloses a sequential wing remover that is mounted on a poultry processing line and engages the birds sequentially to remove the wings of the birds on one side of the breast first and then to remove the wings on the opposite side of the breasts. This device, however, is designed to cut the wings of the birds away from their breasts with an additional amount of breast meat being pulled and cut away with the wings so as to give meatier wings, at the expense of the breasts of the birds. Such removal of breast meat with the wings today is not very desirable as the breasts of the birds are generally in higher demand, more and are the more expensive parts of the carcass, while the wings are typically much less expensive and of less demand.

Accordingly, it can be seen that the need exists for an online wing remover than can be mounted along a poultry processing line, and which engages and progressively and cleanly removes the wings from the breasts and backs of the birds as the birds are carried in series along an overhead conveyor line with the danger of creating bone fragments or chips in the meat of the birds being minimized and which retains a maximum amount of meat on the breasts of the birds.

### SUMMARY OF THE INVENTION

Briefly described, the present invention comprises a wing remover for removing the wings from the breasts and backs of previously eviscerated birds as the birds are moved along a processing path suspended by their legs from an overhead conveyor line with their backs leading and breasts trailing. As the birds enter the wing remover, the birds engage a pair of spaced parallel partitions that extend longitudinally, substantially parallel to the processing path of the birds. The partitions generally comprise vertically oriented, substantially rectangularly shaped plates formed from a metal such as stainless steel. Each partition includes an upwardly sloping proximal end, a distal end, and an inwardly projecting upper edge along which the shoulders of the birds move. The partitions act as a means for guiding the birds through the wing remover and maintain the necks and shoulders of the birds in a desired alignment as the wings are cut from the birds.

Wing guides are mounted adjacent the partitions, along and spaced from an outer facing surface of each partition. The wing guides generally include vertically oriented sprockets or guide wheels that include a series of radially projecting teeth about their circumference. Elongated guide plates are mounted above the guide wheels and extend parallel to the processing path through the wing cutter. The guide wheels are engaged by the shoulder joints of the birds as the birds are moved along the processing path, causing the shoulder joints to be urged upwardly and the wings to be urged downwardly and rearwardly to open the shoulder joints. Thereafter, as the wings are moved along the guide plates, wings are caused to roll toward the breasts of the birds to align and maintain the shoulder joints of the birds open for cutting.

A cutting station is positioned downstream from the wing guides, mounted along the partitions. The cutting station includes first cutting blades, which comprise stationary knives, each mounted along an inner facing surface of each partition. The knives engage and cut through the skin and leaders on the tops of the shoulder joints of the birds which connect the wings to the shoulders of the birds. Fenders are mounted to the upper edges of the partitions, positioned immediately adjacent and in abutment with the rear edges of the stationary cutting blades. The fenders flare outwardly from the partitions and the processing path of the birds toward the wing guides.

The wings of the birds are engaged between the fenders and guide plates of the wing guides as the stationary cutting blades cut through the leaders, etc. across the tops of the shoulders of the birds. As a result, the wings are caused to be rolled rearwardly toward the breasts of the birds, and the shoulder joints of the birds are further opened so that the bones of the wings tend to become oriented diagonally as the wings are urged towards the breasts of the birds. The bones thus are aligned for cutting by a set of second cutting blades of the cutting station.

The second cutting blades comprise outwardly sloping rotary disc cutting blades mounted on opposite sides of the processing path immediately downstream from the first cutting blades. The rotary disc cutting blades project through slotted openings formed in the partitions. The rotary disc cutting blades are further positioned at an angle with respect to the oncoming birds so as to be aligned approximately longitudinally with the wing bones of the wings of the birds after the wings have been rolled toward the breasts of the birds. The rotary disc cutting blades cut through the open shoulder joints and partially along the length of the wing bones to separate the wings from the breasts and backs of the birds with a maximum amount of meat from about the shoulder joints being retained with the breasts.

Thus, it is an object of the present invention to provide an improved method and apparatus for automatically removing the wings from birds.

Another object of the present invention is to provide an improved method and apparatus for cleanly and accurately removing the wings of birds as the birds are conveyed along a processing path suspended from an overhead conveyor line.

Another object of the present invention is to provide an improved apparatus and method of removing the wings from birds being conveyed in series suspended from an overhead conveyor line, which is adjustable to accommodate birds of varying sizes.

Still another object of the present invention is to provide an improved method and apparatus for automatically removing the wings of birds while retaining a maximum amount of meat from about the shoulder joints of the birds with the breasts of the birds, and with the hazard of engaging the bones of the birds and creating bone chips, etc. being minimized.

Still another object of the present invention is to provide an improved method and apparatus for removing the wings from birds as the birds are conveyed in series along a processing path, in which the wings of the birds are progressively rolled towards the breasts of the birds as part of a multi-step cutting operation so that the shoulder joints between the wings and shoulders of the birds are opened and the wing bones become aligned with a cutting means for cutting along the wing bones to separate the wings from the birds while retaining a maximum amount of meat from about the shoulder joints with the breasts of the birds.

Various other objects, features and advantages of the present invention will become apparent upon reading the following specification, when taken in conjunction with the accompanying drawings.

### BRIEF DESCRIPTION OF THE DRAWINGS

Fig. 1 is a perspective illustration of the wing remover mounted along a poultry processing line.

Fig. 2 is a plan view of the wing remover of Fig. 1.

Fig. 3 is a perspective illustration of one side of the wing remover, illustrating the movement of a bird along a guide partition and the engagement of the wing of the bird by a wing guide, with parts being removed for clarity.

Fig. 4 is an end view of the wing remover illustrating the movement of a bird into the wing remover with the wings of the bird being engaged on each side by the wing guides.

Figs. 5a-5d are side elevational views schematically illustrating the process by which the wings of the birds are engaged, cut, rolled towards the breasts of the birds, and removed by the wing remover.

### DETAILED DESCRIPTION

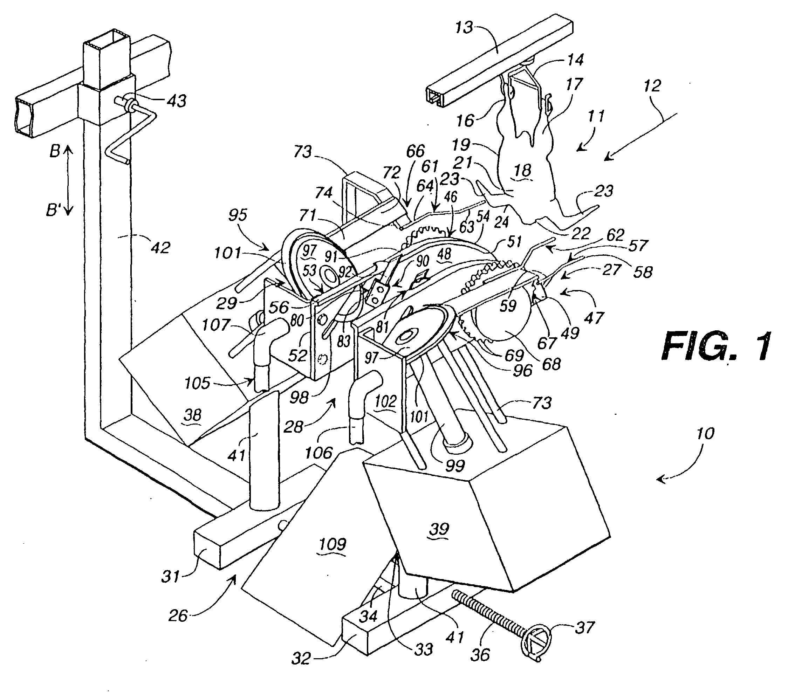

Referring now in greater detail to the drawings in which like numerals indicate like parts throughout the several views, Fig. 1 illustrates the wing remover 10 for removing the wings from birds 11 moving in spaced series along a processing path, indicated by arrows 12 suspended from an overhead conveyor line 13 on shackles 14. Each of the birds generally will have been previously eviscerated and processed for segmenting by a cut-up line. The birds each include legs 16 that are received and held within the shackles 14, thighs 17, back 18, breast 19, shoulders 21, neck 22, wings 23, and shoulder joints 24 between the wings and shoulders 21. The birds are suspended by their legs from the shackles 14 with their neck portions 22 hanging downwardly and are moved along their processing path 12 with their backs 18 leading and their breasts 19 trailing, and with the wings 23 of the birds spread and extending laterally outwardly from the birds.

As Fig. 1 illustrates, the wing remover 10 is mounted along the processing path of the birds and is positioned at an elevation sufficient to receive and engage the birds as the birds are moved along their processing path by the overhead conveyor line. The wing remover is adjustably mounted to the poultry cut-up line (not shown), and includes an adjustable framework 26 to enable the adjustment of the elements of the wing remover to accommodate birds of varying sizes. The wing remover 10 further has a proximal or inlet end 27 at which the birds are received and a distal or outlet end 28 from which the birds are discharged. A cutting area or station 29 in which the wings of the birds are cut from the breasts and backs of the birds is positioned adjacent the outlet end 28 of the wing remover.

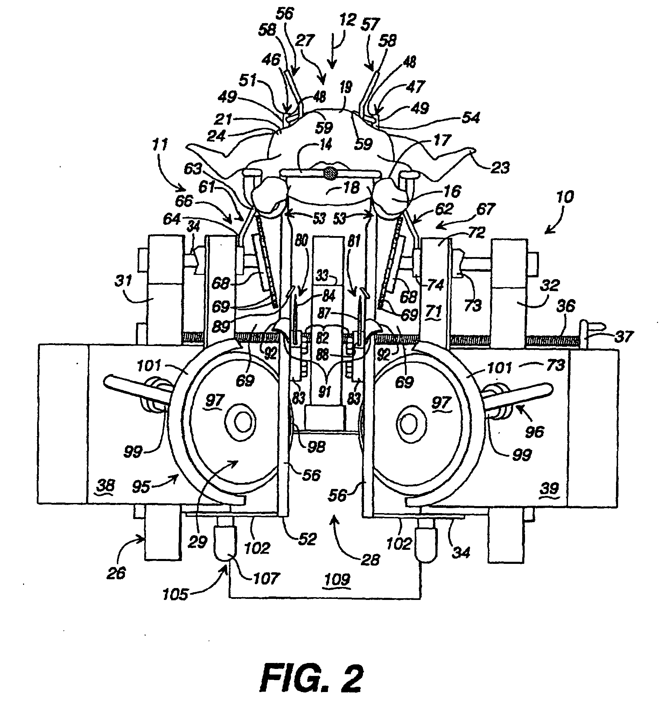

As shown in Figs. 1 and 2, the adjustable framework 26 of the wing remover 10 includes a series of support bars or beams 31, 32, and 33 (Fig. 2), with support beams 31 and 32 being movable in the direction of arrows A and A' laterally toward and away from the central support beam 33. The support beams are mounted on travel rods 34, and a travel screw 36 having a hand crank 37 which is rotated to cause the support beams 31 and 32 to be moved toward or away from the central support beam 33 as needed for the wing remover 10 to accommodate birds of varying sizes. The framework 26 further includes housings 38 and 39 mounted to the support beams 31 and 32 by upstanding bars or rods 41. The housings support the cutting and guiding elements of the wing remover 10. As Fig. 1 indicates, the frame 26 is mounted to a support 42 that attaches to the central support beam, and is mounted at its opposite end to the poultry cut-up line by an adjustable mount 43 for supporting the wing remover therealong, and which enables the wing remover to be adjusted vertically in the direction of Arrows B and B' with respect to the oncoming birds to accommodate birds of varying sizes.

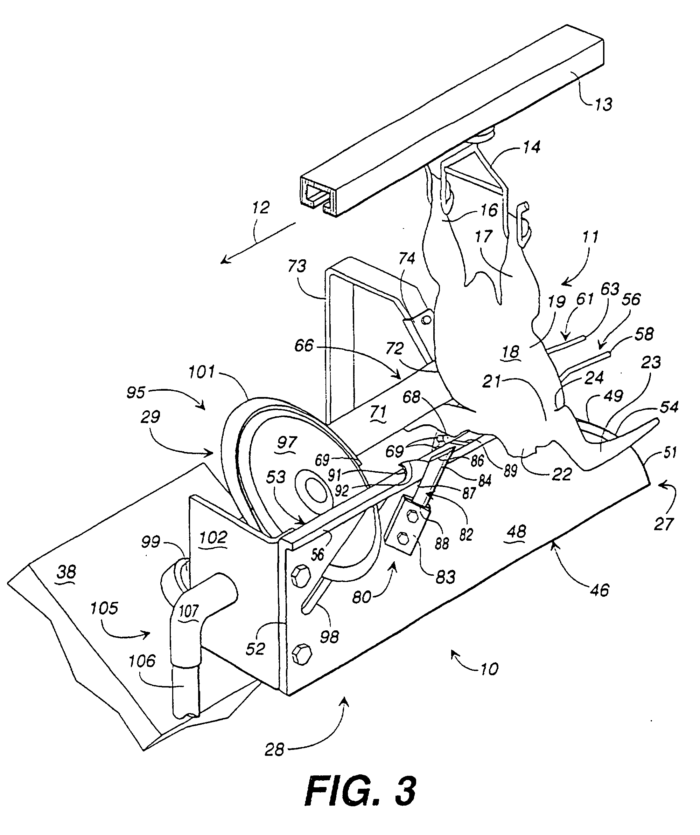

As shown in Figs. 1 and 2, a pair of longitudinally extending partitions 46 and 47 extend from the inlet end 27 of the wing remover to its outlet end 28. The partitions 46 and 47 are oriented parallel to one another and extend through the wing remover on opposite sides of the processing path 12. As shown in Fig. 3, each partition is a trapezoidally shaped plate formed from a metal such as stainless steel and is oriented vertically. The partitions each include an inwardly facing surface 48, an outwardly facing surface 49, a proximal or first end 51, a distal or second end 52, and an upper edge 53. The upper edge 53 of each partition includes an upwardly sloping forward portion 54 and a horizontally oriented, inwardly projecting or flaring portion 56 that extends through the cutting station 29 of the wing remover 10.

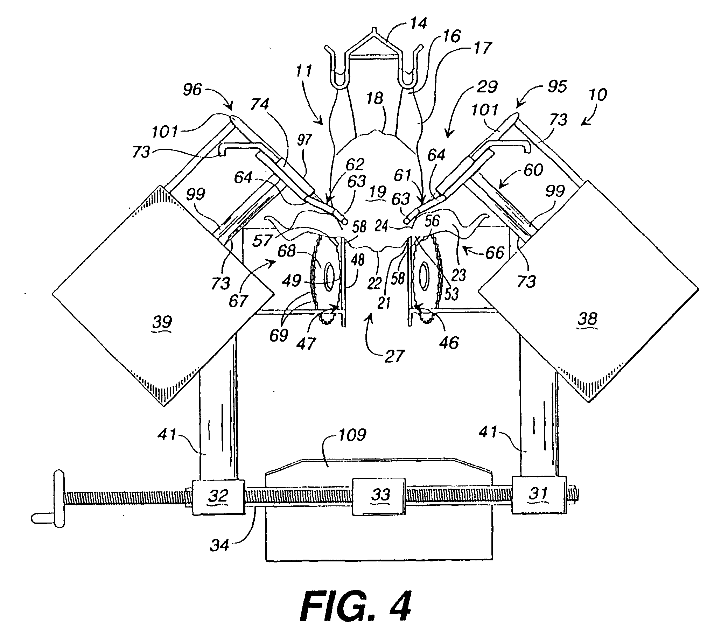

As illustrated in Figs. 1 and 4, a pair of lower guide rods 56 and 57 are mounted at the inlet end 27 of the wing remover 10. The lower guide rods 56 and 57 are elongated metal rods, and each include a downwardly sloping proximal or first end 58 that projects forwardly from the wing remover toward the oncoming birds, and an upwardly sloping distal or rearward portion 59 that extends toward the first ends 51 of the partitions. Upper guide rods 61 and 62 are positioned above and extend partially parallel to the lower guide rods 56 and 57 from in front of the wing remover along the processing path of the birds into the wing remover. The upper guide rods 61 and 62 include first portions 63 that engage and direct the birds toward the partitions to stabilize and prevent the birds from swinging, and substantially horizontally extending rear portions 64 that engage the underside portions of the wings as the birds move along the processing path.

As the birds enter the wing remover, the backs of the birds engage the lower guide rods 56 and 57 and the sides of the birds engage the upper guide rods 61 and 62. The engagement with the lower guide rods tends to tilt the birds while the upper and lower guide rods together direct the birds into the wing remover and help stabilize the birds as the birds enter the wing remover. Thereafter, the necks 22 of the birds are received between the partitions as the shoulders 21 of the birds engage and slide upwardly along the forward portions 54 of the partitions, which causes the birds to tilt slightly forwardly and the wings 23 to be guided upwardly as the birds are pulled into the wing remover.

Wing guides 66 and 67 (Figs. 1, 2 and 4), are mounted on opposite sides of the processing path 12 along and adjacent the partitions 46 and 47. Each wing guide includes a vertically oriented guide wheel or sprocket 68 rotatbly mounted adjacent the outwardly facing surface 49 of each partition. The guide wheels typically are formed from a material such as nylon or a similar durable plastic material and include a series of radially projecting teeth 69. As shown in fig. 1, the guide wheels project slightly above the upper edges 53 of the partitions 46 and 47. The shoulders of the birds engage and ride over the guide wheels, causing the shoulders to be urged upwardly and the shoulder joints to open. The teeth of the guide wheels engage the birds at the shoulders 22 thereof as the birds pass over the guide wheels and prevent the birds from slipping and becoming misaligned prior to cutting.

The wing guides 66 and 67 further include elongated guide plates or bars 71, typically formed from a metal such as stainless steel. The guide plates 71 are mounted at one end 72 to support brackets 73 and extend substantially parallel to the partitions 46 and 47 on each side of the wing remover. The guide plates help guide and stabilize the birds and wings as they move through the cutting station 29. As shown in Fig. 1, the support brackets 73 are typically substantially L-shaped supports with connector sleeves 74 mounted at a lower end, to which the first ends 72 of the guide plates 71 and the rear portions 64 of the upper guide rods are mounted for support.

As shown in Figs. 1 and 2, the cutting station 29 is positioned immediately downstream from the wing guides 66 and 67, mounted along and projecting through the partitions 46 and 47. The cutting station includes a set or pair of first cutting blades 80 and 81 positioned on opposite sides of the processing path 12 of the birds 11. The first cutting blades generally comprise stationary knives 82 mounted in knife brackets 83 that are attached to the inwardly facing surfaces 48 of the partitions 46 and 47. As shown in Fig. 3, the knives 82 each are oriented at an angle with respect to the oncoming birds and extend slightly above the upper edge 53 of their partition. The knives each include a forward or cutting edge 84, and upper edge 86, rear edge 87, and a lower end 88 that is received and secured within its knife bracket 83.

The knives are positioned within the path of the oncoming birds with their cutting edges 84 aligned with the shoulder joints 24 between the wings 23 and shoulders 21 of the oncoming birds 11. As the birds move through the wing remover with their shoulders sliding along the upper edges of the partitions and with their wings being engaged by the wing guides, the opened shoulder joints are carried into engagement with the first cutting blades which tend to cut through the skin and leaders, ligaments, etc., holding the wings to the shoulders of the birds. This cutting of the leaders, etc. and guiding of the wings causes the wings to be rolled back toward the breast of the bird to dislocate the wing ones from the shoulder joints.

As shown in Fig. 3, guide pins 89 are mounted to the upper edges 53 of the partitions, positioned in front of the knives 82. the guide pins 89 are formed from metal and project at an angle upwardly toward the cutting edges 84 of the knives 82. The pins 89 guide the tops of the shoulders 21 of the birds 11 toward the knives to ensure the shoulder joints 24 engage and are cut by the knives.

Guide fenders 91 are mounted to the upper edges 53 of the partitions 46 and 47 (Figs. 1 and 2), attached to and extending outwardly from the rear edges 87 of the knives 82. The fenders typically are formed as part of the upper edges of the partitions and are generally triangularly shaped, including a guide edge or surface 92. The wings of the birds tend to engage the guide edges as the birds are moved over and are engaged by the first cutting blades so that as the first cutting blades cut through the leaders, ligaments, etc. holding the wings to the birds, so that the wings are rolled rearwardly toward the breasts of the birds to further open the shoulder joints and align the wing bones for completion of the removal of the wings from the birds.

The cutting station 29 further includes a set or pair of second cutting blades 95 and 96 mounted downstream from the first cutting blades 80 and 81. The second cutting blades each comprise rotary disc cutting blades 97 that are positioned at an angle with respect to the oncoming birds. The rotary disc cutting blades extend downwardly toward the processing path of the birds and are received through slots 98 formed in the partitions 46 and 47 as shown in Fig. 3. The rotary disc cutting blades 97 are mounted on drive shafts 99 (Fig. 1) that are connected to drive motors (not shown) contained within the housings 38 and 39. The rotary disc cutting blades further are oriented diagonally with respect to the processing path of the birds so as to cut through the opened shoulder joints partially along the length of the wing bones with the wings in their rolled back position adjacent the breasts of the birds. The rotary disc cutting blades complete the separation of the wings with a maximum amount of meat remaining with the breasts of the birds, instead of being cut away from the breasts with the wings.

A guard 101 is mounted about the upper edge of each rotary disc cutting blade 97 and attaches at one end to a guide plate 71 of each wing guide 66 and 67 to provide further support for the guide plates. The guards attach at their opposite ends to a rectangular frame plate 102 mounted to the distal end 52 of each partition 46 or 47. The guards 101 prevent inadvertent contact by workers with the rotary disc cutting blades to prevent injury, etc.

As illustrated in Fig. 1, fluid lines 105 are connected to each of the frame plates 102 mounted to the distal ends 52 of the partitions 46 and 47. The fluid lines include flexible conduits 106 that are connected at one end to a fluid supply for supplying water to the wing remover, and are connected at their opposite end to an elbow connector 107 mounted to each frame plate 102. The fluid lines supply a flow of water that is directed against the cutting blades to wash away any collected debris such as skin, etc. for sanitary purposes.

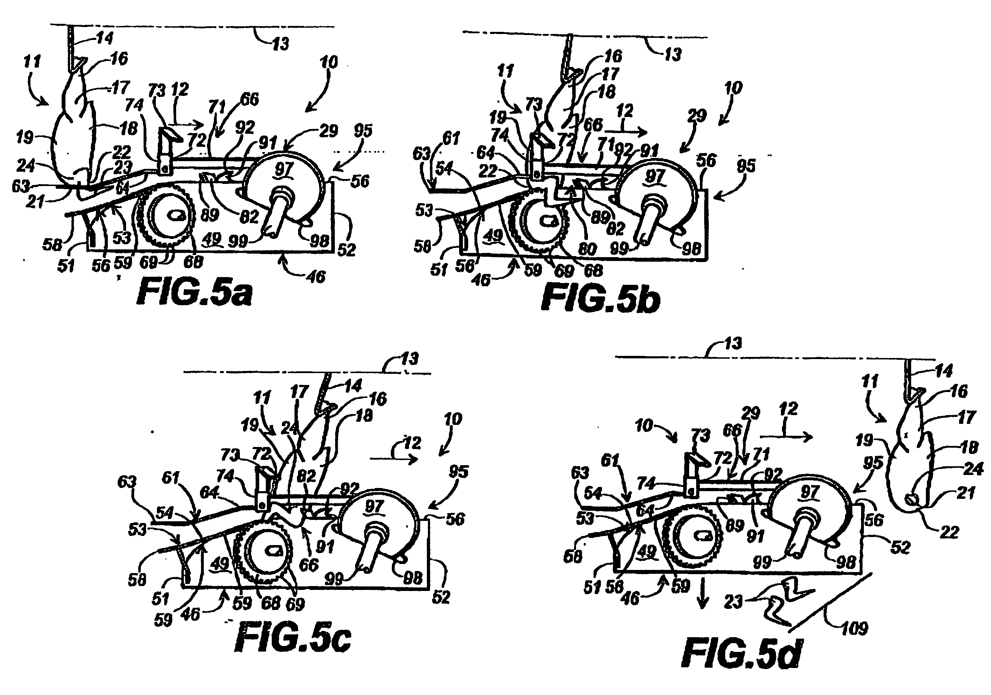

A slide 109 is mounted beneath the cutting station 29 of the wing remover 10. The slide generally is made from metal such as stainless steel and slopes downwardly away from the wing remover. As the wings are cut from the birds, as illustrated in Fig. 5, the wings fall downwardly through the wing remover onto the slide which directs the wings toward a collection means such as a bin or transfer conveyor (not shown) for collection and further processing.

### OPERATION

In the operation of the wing remover 10 (Fig. 1) the birds are carried along their processing path 12 by the overhead conveyor line into engagement with the wing remover with the backs 18 of the birds 11 leading, their breasts 19 trailing and with their wings 23 extending outwardly. As the birds enter the wing remover 10, as shown in Fig. 1, the backs of the birds engage the lower guide rods 56 and 57 and the sides of the birds engage the upper guide rods 61 and 62. The guide rods stabilize and prevent the birds from swinging and direct the shoulders and backs of the birds toward the partitions and along the processing path through the wing remover. As illustrated in Fig. 5, the shoulders 21 of the birds 11 tend to engage the sloped forward portions 54 of the upper edges 53 of the partitions 46 and 47 with the necks 23 of the birds being received within the partitions. As a result, the birds tend to tilt forwardly as the birds slide upwardly along the forward portions of the partitions. This causes the birds to be properly positioned for cutting regardless of small variations in size of the birds.

As the birds are pulled along the partitions, the wings of the birds are engaged by and ride over the toothed sprockets 68 of the wing guides 66 and 67 (Fig. 1), the teeth 69 of which engage and hold the birds in a desired alignment for cutting and prevent the birds from slipping or twisting. The engagement of the shoulders of the birds by the guide wheels tends to urge the shoulders upwardly and cause the wings to move downwardly. This accordingly opens the shoulder joints for cutting.

The opened shoulder joints of the birds thereafter are carried into engagement with first cutting blades 80 and 81. The first cutting blades cut through the skin, leaders, ligaments, etc. that extend across the tops of the shoulder joints to connect the wings to the shoulders of the birds as the birds are pulled through the wing remover by their overhead conveyor line. The first cutting blades thus start the separation of the wings from the breasts and backs of the birds. As the birds are pulled further forwardly over the first cutting blades, the wings engage the guide fenders 91. The guide fenders act with the guide plates of the wing guides to urge the wings further downwardly and rearwardly, causing the wings to roll toward the breasts of the birds. As a result, the wing bones become dislocated from the shoulder joints and become diagonally oriented.

As shown in Fig. 5, after the wings have initially been cut by the first cutting blades, the birds are carried into engagement with the second cutting blades 95 and 96 (Fig. 2). The second cutting blades are oriented so as to cut through the opened shoulder joints and cut partially along the length of the wing bones. The second cutting blades complete the separation of the wings from the shoulders of the birds while leaving a maximum amount of breast meat remaining from about the shoulder joints for remaining with the breasts of the birds so as to further increase the size and weight of the more valuable breast meat of the birds. Thereafter, the separated wings drop down through the wing remover onto the slide 109 and are directed into a collection means for collection or further processing while the birds are carried further forwardly along their processing path through additional cutting and processing stations.

It will be understood by those skilled in the art that the present invention can be adapted for use in processing all types of poultry or foul including turkeys, chickens and other birds. It further will be understood by those skilled in the art that while the invention has been disclosed with reference to a preferred embodiment, various modifications, additions and deletions can be made thereto without departing from the scope of the invention as set forth in the following claims.

## Claims

1. A method of removing the wings of birds with the amount of the meat of the birds removed with the wings being minimized, comprising the steps of:
suspending each bird by its legs from a shackle of a suspended conveyor system;
advancing the birds while suspended on the shackles along a processing path in series toward a cutting station;
as the birds move through the cutting station, engaging the birds with a first cutting means and cutting the birds between the wings and backs thereof;
**characterized by**:
as the birds engage the first cutting means, moving the wings toward the breasts of the birds to open the joints between the wings and backs of the birds; and
cutting through the opened joints with a second cutting means that cuts adjacent and partially along the bones of the wings to separate the wings from the breasts and backs of the birds with a minimal amount of meat of the breast and backs being removed with the wings.

2. The method of claim 1, wherein the step of moving the wings toward the breasts comprises engaging the wings with a guide means adjacent the first cutting means, and guiding the wings toward the breasts of the birds to open the joints for cutting with the first cutting means.

3. The method of claim 1 or 2 and further including the step of guiding the necks and shoulders of the birds through the cutting station.

4. The method of claim 3, wherein the step of guiding the necks and shoulders of the birds comprises engaging the necks and shoulders with an elongated guide rail with the necks and shoulders moving therealong as the birds are moved through the cutting station to maintain the birds in a desired alignment for cutting.

5. The method of any one of the claims 1-4, wherein the step of moving the wings toward the breasts comprises rolling the wings toward the breasts as the first cutting means cuts through the joints, opening the joints, and urging the bones of the wings away from the backs of the birds so that the opened joints become aligned with the second cutting means.

6. An apparatus (10) for removing the wings from birds as the birds are suspended invertedly from their legs by shackles (14) and moved in series along a processing path with the breast of each bird following the back of each bird, comprising:
bird guiding means (46,47) for guiding the birds through the apparatus, positioned on opposite sides of and extending along the processing path and adapted to engage the shoulders of the birds and position the birds for cutting; **characterized by**:
wing guides (66,67;71) mounted adjacent said bird guiding means in a position to engage the shoulders of the birds as the birds are moved along the bird guiding means for lifting the shoulders and urging the wings toward the breasts of the birds to open the shoulder joints;
a first cutting means (80,81) mounted along said upper edge of each guiding means for initially cutting between the wings and backs of the birds to initiate the separation of the wings from the backs and cause the shoulder joints to be further open and the wings to be further urged toward the breasts of the birds; and
second cutting means (95,96) mounted downstream from said first cutting means adjacent the downstream end of the bird guiding means and oriented for cutting through the opened shoulder joints and partially along the wings of the birds to complete the separation of the wings from the birds with a maximum amount of meat from about the shoulders of the birds being retained with the breasts of the birds.

7. The apparatus of claim 6, wherein said wing guides include guide wheels (66,67) rotatably mounted on opposite sides of the processing path in a position to engage the birds and to urge the shoulders of the birds upwardly as the wings are urged toward the breasts of the birds to open the shoulder joints for cutting.

8. The apparatus of claim 6 or 7 and further including a guide fender (91) mounted along each bird guide means (46,47) adjacent said first (80,81) and second (95,96) cutting means for engaging and guiding the wings outwardly as the birds are engaged by said second cutting means.

9. The apparatus of claim 6, 7 or 8, said first cutting means (80,81) comprises stationary knives mounted along said guiding means (46,47) in a position to engage and cut into the shoulders of the birds.

10. The apparatus of claims 8 and 9, wherein said guide fenders (91) are arranged immediately adjacent and in abutment with the rear edges of the first (80,81) cutting means.

11. The apparatus of claim 8, 9 or 10, wherein said wing guides comprise elongate guide plates or bars (71) arranged to cooperate with the guide fenders (91) to urge the wings further downwardly and rearwardly.

12. The apparatus of any one of the claims 6-11, wherein said second cutting means comprises rotary disc cutting blades (97) are each oriented at an angle so as to be approximately aligned with the wings of the birds for cutting through the shoulder joints and partially along the wings.

13. The apparatus of claim 12, wherein said disc cutting blades (97) are positioned at an angle with respect to the processing path and are oriented diagonally with respect to the processing path.

14. The apparatus of any one of the claims 6-13, wherein said guiding means are a pair of spaced partitions positioned on opposite sides of the processing path and each having a first end, a second end, and an upper edge adapted to be engaged by and along which the shoulders of the birds move.

15. The apparatus of claim 14, when dependent of claim 13 and wherein said rotary disc cutting blades extend partially through said partitions.

16. The apparatus of any one of the claims 6-15, wherein said bird guiding means (46,47), said wing guides (66,67;71) and said first (80,81) and second (95,96) cutting means are positioned on either side of the processing path and opposite one another for simultaneaous engaging both wings of the birds.

## Patentansprüche

1. Verfahren zum Entfernen der Flügel von Geflügel, wobei die Menge von mit den Flügeln weggenommenem Fleisch von dem Geflügel auf ein Miminum reduziert wird, umfassend die Schritte von:
dem Aufhängen von jedem Geflügel mit seinen Beinen an einem Hänger einer hängenden Förderanlage;
dem Vorschieben des an den Hängern aufgehängenen Geflügels in Reihen entlang einer Verarbeitungsbahn zu einem Schneidposten;
während das Geflügel durch den Schneidposten bewegt, dem Angreifen des Geflügels mit einem ersten Schneidmittel und dem Schneiden des Geflügels zwischen den Flügeln und deren Rücken;
**gekennzeichnet durch**
während das Geflügel das erste Schneidmittel angreift, das Bewegen der Flügel zu den Brüsten des Geflügels, um die Gelenke zwischen den Flügeln und den Rücken des Geflügels zu öffnen; und
das Schneiden **durch** die geöffneten Gelenken mit einem zweiten Schneidmittel, das neben und teilweise entlang den Flügelknocken schneidet, um die Flügel von den Brüsten und Rücken des Geflügels zu trennen, wobei eine minimale Menge Fleisch von der Brust und dem Rücken mit den Flügeln entfernt wird.

2. Verfahren nach Anspruch 1, wobei der Schritt von Bewegen der Flügel zu den Brüsten umfaßt das Angreifen der Flügel mit einem Führungsmittel neben dem ersten Schneidmittel, und das Führen der Flügel zu den Brüsten des Geflügels um die Gelenke zum Schneiden mit dem ersten Schneidmittel zu öffnen.

3. Verfahren nach Anspruch 1 oder 2 und weiter umfassend den Schritt von dem Führen der Nacken und Schulter des Geflügels durch den Schneidposten.

4. Verfahren nach Anspruch 3, wobei der Schritt von dem Führen der Nacken und Schulter des Geflügels umfaßt das Angreifen der Nacken und Schulter mit einer länglichen Führungsschiene, wobei die Nacken und Schulter da entlang bewegen, während das Geflügel durch den Schneidposten bewogen wird, um das Geflügel in einer gewünschten Ausrichtung zum Schneiden zu behalten.

5. Verfahren nach einem der Ansprüche 1-4, wobei der Schritt von Bewegen der Flügel zu den Brüsten umfaßt das Rollen der Flügel zu den Brüsten während das erste Schneidmittel durch die Gelenke schneidet, das Öffnen der Gelenke, und das Wegtreiben der Flügelknochen von den Rücken des Geflügels, so daß die geöffneten Gelenke nach dem zweiten Schneidmittel ausgerichtet werden.

6. Vorrichtung (10) zum Entfernen der Flügel von Geflügel während das Geflügel umgekehrt an seinen Beinen an Hängern (14) aufgehängt ist und in Serien entlang einer Verarbeitungsbahn bewogen wird mit der Brust von jedem Geflügel folgend auf den Rücken von jedem Geflügel, umfassend:
Geflügelführungsmittel (46, 47) zum Führen des Geflügels durch die Vorrichtung, auf gegenüberliegenden Seiten von und erstreckend entlang der Verarbeitungsbahn gelegen und eingerichtet um die Schulter des Geflügels anzugreifen und das Geflügel in die Position zum Schneiden zu bringen; **gekennzeichnet durch**:
Flügelführungen (66, 67; 71) neben den Geflügelführungsmitteln in einer Position montiert um die Schulter des Geflügels anzugreifen während das Geflügel entlang den Geflügelführungsmitteln bewogen wird um die Schulter zu heben und die Flügel zu den Brüsten des Geflügels zu treiben, um die Schultergelenke zu öffnen;
ein erstes Schneidmittel (80, 81) entlang dem Oberrand von jedem Führungsmittel montiert um zwischen den Flügeln und Rücken des Geflügels einleitend zu schneiden um die Trennung von den Flügeln von den Rücken einzuleiten und die Schultergelenke weiter öffnen zu lassen und die Flügel weiter zu den Brüsten des Geflügels treiben zu lassen; und
zweite Schneidmittel (95, 96) stromabwärts von dem ersten Schneidmittel neben dem stromabwärtsen Ende der Geflügelführungsmittel montiert, und orientiert um **durch** die geöffneten Schultergelenken zu schneiden und teilweise entlang den Flügeln des Geflügels um die Trennung von den Flügeln des Geflügels, mit einer maximalen Menge Fleisch von Schulternbereich der Geflügel mit den Brüsten der Geflügel festgehalten, zu vervollständigen.

7. Vorrichtung nach Anspruch 6, wobei die Flügelführungen drehbar auf gegenüberliegenden Seiten der Weiterverarbeitungsbahn montierte Führungsräder (66, 67) umfassen in einer Position um das Geflügel anzugreifen und die Schulter des Geflügels aufwärts zu treiben während die Flügel zu den Brüsten des Geflügels getrieben werden um die Schultergelenke zum Schneiden zu öffnen.

8. Vorrichtung nach Anspruch 6 oder 7 und weiter umfassend einen Führungsstreicher (91) entlang jedem Geflügelführungsmittel (46, 47) neben dem ersten (80, 81) und zweiten (95, 96) Schneidmittel montiert, um die Flügel anzugreifen und auswärts zu führen während das Geflügel durch die zweiten Schneidmittel angegriffen wird.

9. Vorrichtung nach Anspruch 6, 7 oder 8, wobei das erste Schneidmittel (80, 81) entlang den Führungsmitteln (46, 47) montierte stationäre Messer umfaßt, in einer Position um die Schulter des Geflügels anzugreifen und darin zu schneiden.

10. Vorrichtung nach Ansprüchen 8 und 9, wobei die Führungsstreicher (91) direkt neben und im Angriff mit den Hinterkanten der ersten (80, 81) Schneidmittel angeordnet sind.

11. Vorrichtung nach Anspruch 8, 9 oder 10, wobei die Flügelführungen verlängerte Führungsplatten oder -stäbe (71) umfassen, angeordnet um mit den Führungsstreichern (91) zusammenzuwirken um die Flügel weiter abwärts und rückwärts zu treiben.

12. Vorrichtung nach einem der Ansprüche 6-11, wobei das zweite Schneidmittel umfaßt drehbare Scheibeschneidblätter (97), jedes in einem Winkel orientiert, um also ungefähr nach den Flügeln des Geflügels ausgerichtet zu sein, um durch die Schultergelenke und teilweise entlang den Flügeln zu schneiden.

13. Vorrichtung nach Anspruch 12, wobei die Scheibeschneidblätter (97) in einem Winkel bezüglich der Verarbeitungsbahn gelegen sind und diagonal bezüglich der Verarbeitungsbahn orientiert sind.

14. Vorrichtung nach einem der Ansprüche 6-13, wobei die Führungsmittel ein Paar von auf Abstand gelegenen Scheidewände sind, die auf gegenüberliegenden Seiten der Verarbeitungsbahn gelegen sind und wobei jedes ein erstes Ende, ein zweites Ende und einen Oberrand, eingerichtet um durch die Schulter des Geflügels angegriffen zu werden und entlang welchem die Schulter des Geflügels bewegen, hat.

15. Vorrichtung nach Anspruch 14, wenn abhängig von Anspruch 13 und wobei die drehbaren Scheibeschneidblätter sich teilweise durch die Scheidewände erstrecken.

16. Vorrichtung nach einem der Ansprüche 6-15, wobei die Geflügelführungsmittel (46, 47), die Flügelführungen (66, 67; 71) und die ersten (80, 81) und zweiten (95, 96) Schneidmittel auf jeder Seite der Verarbeitungsbahn und gegenüber einander gelegen sind, um gleichzeitig beide Flügel des Geflügels anzugreifen.

## Revendications

1. Procédé d'enlèvement des ailes des oiseaux en minimisant la quantité de chair des oiseaux enlevée avec les ailes, comprenant les étapes consistant à :
suspendre chaque oiseau par les pattes à un étrier d'un système de transport suspendu ;
faire avancer les oiseaux suspendus aux étriers selon un parcours de traitement en série vers une position de découpe ;
quand les oiseaux se déplacent à travers la position de découpe, engager les oiseaux avec un premier moyen de découpe et couper les oiseaux entre les ailes et les dos de ceux-ci ;
**caractérisé en ce que** :
quand les oiseaux sont engagés avec le premier moyen de découpe, on déplace les ailes vers les poitrines des oiseaux de façon à ouvrir les articulations entre les ailes et les dos des oiseaux ; et
on coupe à travers les articulations ouvertes à l'aide d'un second moyen de découpe qui coupe de manière adjacente et partielle le long des os des oiseaux de façon à séparer les ailes des poitrines et des dos des oiseaux en enlevant avec les ailes une quantité minimale de la chair de la poitrine et du dos.

2. Procédé selon la revendication 1, dans lequel l'étape consistant à déplacer les ailes vers les poitrines comprend l'engagement des ailes avec un moyen de guidage adjacent au premier moyen de découpe et le guidage des ailes vers les poitrines des oiseaux afin d'ouvrir les articulations en vue de la découpe par le premier moyen de découpe.

3. Procédé selon la revendication 1 ou 2 et comprenant en outre l'étape consistant à guider les cous et les épaules des oiseaux à travers la position de découpe.

4. Procédé selon la revendication 3, dans lequel l'étape consistant à guider les cous et les épaules des oiseaux comprend l'engagement des cous et des épaules des oiseaux par un rail de guidage longitudinal, les cous et des épaules des oiseaux se déplaçant le long de celui-ci quand les oiseaux traversent la position de découpe de manière à maintenir les oiseaux dans un alignement désiré pour la découpe.

5. Procédé selon l'une quelconque des revendications 1 à 4, dans lequel l'étape consistant à déplacer les ailes vers les poitrines comprend l'écrasement des ailes vers les poitrines quand le premier moyen de découpe coupe à travers les articulations, l'ouverture des articulations, et l'enlèvement des os des ailes par rapport aux dos de sorte que les articulations ouvertes soient alignées avec le second moyen de découpe.

6. Appareil (10) d'enlèvement des ailes d'oiseaux quand les oiseaux sont suspendus la tête en bas par leurs pattes à des étriers (14) et déplacés en série le long d'un parcours de traitement, avec la poitrine de chaque oiseau suivant le dos de chaque oiseau, comprenant :
des moyens de guidage (46, 47) des oiseaux pour le guidage des oiseaux à travers l'appareil, positionnés sur les côtés opposés du parcours de traitement et d'étendant le long de celui-ci, et adaptés à engager les épaules des oiseaux et à positionner les oiseaux en vue de la découpe, **caractérisé en ce que** :
les guides d'ailes (66, 67 ; 71) montés de manière adjacente aux dits moyens de guidage dans une position propre à engager les épaules des oiseaux quand les oiseaux sont déplacés le long des moyens de guidage des oiseaux pour soulever les épaules et forcer sur les ailes vers les poitrines afin d'ouvrir les articulations des épaules ;
un premier moyen de découpe (80, 81) est monté le long dudit bord supérieur de chaque moyen de guidage pour couper initialement entre les ailes et les dos des oiseaux afin d'amorcer la séparation des ailes et des dos et causer une action supplémentaire d'ouverture des articulations des épaules et une action supplémentaire de forcement sur les ailes vers les poitrines des oiseaux; et
un second moyen de découpe (95, 96) est monté en aval dudit premier moyen de découpe, adjacent à l'extrémité aval du moyen de guidage des oiseaux et orienté de façon à couper à travers les articulations ouvertes des épaules et partiellement le long des ailes des oiseaux afin d'achever la séparation des ailes des oiseaux en maintenant avec les poitrines des oiseaux une quantité maximale de chair des épaules du voisinage des épaules des oiseaux.

7. Appareil selon la revendication 6, dans lequel lesdits guides d'ailes comprennent des roues de guidage (66, 67) montées avec possibilité de rotation sur les côtés opposés du parcours de traitement dans une position propre à engager les oiseaux et à forcer vers le haut sur les épaules des oiseaux quand on force sur les ailes vers les poitrines des oiseaux afin d'ouvrir les articulations des épaules pour la découpe.

8. Appareil selon la revendication 6 ou 7 et comprenant en outre un capot (91) de guide monté le long de chaque moyen de guidage (46, 47) d'oiseaux, de manière adjacente aux dits premier (80, 81) et second (95, 96) moyen de découpe pour engager et guider les ailes vers l'extérieur quand les oiseaux sont engagés par ledit second moyen de découpe.

9. Appareil selon les revendications 6, 7 ou 8, dans lequel ledit premier moyen de découpe (80, 81) comprend des couteaux fixes montés le long desdits moyens de guidage (46, 47) dans une position permettant d'engager et de couper dans les épaules des oiseaux.

10. Appareil selon les revendications 8 et 9, dans lequel lesdits capots (91) de guide sont disposés de manière immédiatement adjacente et en butée avec les bords postérieurs du premier (80, 81) premier moyen de découpe.

11. Appareil selon les revendications 8, 9 ou 10, dans lequel lesdits guides d'ailes comprennent des plaques ou barres (71) longitudinales de guidage disposées de manière à agir en coopération avec les capots (91) de guide pour forcer à nouveau sur les ailes, vers le bas et vers l'arrière.

12. Appareil selon l'une quelconque des revendications 6 à 11, dans lequel ledit second moyen de découpe comprend des lames coupantes (97) sur disque tournant, qui sont chacune orientées selon un angle tel qu'elles sont approximativement alignées avec les ailes des oiseaux pour la découpe à travers les articulations des épaules et partiellement le long des ailes.

13. Appareil selon la revendication 12, dans lequel lesdites lames coupantes (97) sur disque sont positionnées à un certain angle par rapport au parcours de traitement et sont orientées diagonalement par rapport au chemin de traitement.

14. Appareil selon l'une quelconque des revendications 6 à 13, dans lequel lesdits moyens de guidage sont une paire de cloisons espacées positionnées sur les côtés opposés du chemin de traitement et possédant chacune une première extrémité, une seconde extrémité et un bord supérieurs, adaptées à être engagés avec les épaules des oiseaux et le long desquelles se déplacent celles-ci.

15. Appareil de la revendication 14, quand il dépend de la revendication 13 et dans lequel lesdites lames coupantes sur disque tournant s'étendent en partie à travers lesdites cloisons.

16. Appareil selon l'une quelconque des revendications 6 à 15, dans lequel lesdits moyens de guidage (46, 47), lesdits guides d'ailes (66, 67 ; 71) et lesdits premier (80, 81) et second (95, 96) moyens de découpe sont positionnés de chaque côté du parcours de traitement et face l'un à l'autre, pour un engagement simultané des deux ailes des oiseaux.
